# EUROPÄISCHE PATENTSCHRIFT

(11) **EP 0 679 209 B1**
(45) Veröffentlichungstag und Bekanntmachung des Hinweises auf die Patenterteilung: **19.11.1997**
(21) Anmeldenummer: 94904572.8
(22) Anmeldetag: 13.01.1994
(51) Int. Cl.: E03B 11/02, B65D 88/06, E03B 3/03

(54) **TANK**
TANK
RESERVOIR

(30) Priorität: 13.01.1993 DE 4300634; 23.06.1993 DE 4320761
(43) Veröffentlichungstag der Anmeldung: 02.11.1995
(73) Patentinhaber: Bender, Jürgen, D-68789 St. Leon-Rot (DE)
(72) Erfinder: Bender, Jürgen, D-68789 St. Leon-Rot (DE)
(74) Vertreter: Naumann, Ulrich, Dr.-Ing.
(86) Internationale Anmeldenummer: DE9400026
(87) Internationale Veröffentlichungsnummer: WO9416156

(56) Entgegenhaltungen:
- FR-A- 2 610 653
- GB-A- 1 468 761
- GB-A- 1 569 103
- GB-A- 1 592 247
- GB-A- 2 065 736
- GB-A- 2 222 612

## Beschreibung

Die vorliegende Erfindung betrifft einen Tank, insbesondere eine Zisterne zur Wasserspeicherung bei einer Nutzungsanlage für Regenwasser, bestehend aus einem eine Öffnung aufweisenden Behältnis mit einer vorzugsweise lichtundurchlässigen Wandung, wobei das Behältnis mindestens zweiteilig ausgebildet ist, wobei im Betriebszustand die das Behältnis bildenden, als Grundteil und als Deckelteil ausgeführten Teilsegmente wasserdicht und lösbar miteinander verbunden sind und wobei sich der Querschnitt des Grundteils nach oben erweitert.

Tanks der in Rede stehenden Art sind seit Jahren aus der Praxis bekannt und dienen grundsätzlich zur Lagerung bzw. zum Sammeln flüssiger Medien. Dabei kann es sich beispielsweise um Tanks zur Lagerung von Kraftstoff oder Heizöl handeln, aber auch um sogenannte Zisternen, die zum Sammeln von Regenwasser dienen.

Mit zunehmenden Umweltproblemen wird Wasser insbesondere in den Industrieländern ein immer knapper und somit kostbarer werdender Rohstoff. Dabei ist wesentlich, daß gerade mal 1% des auf der Erde verfügbaren Wassers trinkbar ist. Der Rest ist nämlich salzig oder gefroren. Ein Teil des eigentlich trinkbaren Wasservorrats der Erde ist mit Pestiziden, Schwermetallen oder Nitraten verunreinigt, die bereits tief in das Grundwasser vorgedrungen sind. Wasser ist demnach in jeder Hinsicht kostbar und wird obendrein in zunehmendem Maße immer teurer, denn jeder Liter Wasser wird dem Verbraucher gleich zweimal in Rechnung gestellt, nämlich einmal als Frischwasser und ein anderes Mal als Abwasser.

Tag für Tag benötigt der Durchschnittsbürger hier in der Bundesrepublik Deutschland etwa 145 Liter Wasser, die sogleich dem Abwasser zugeführt werden.

Aufgrund der voranstehend genannten Situation wird es für die privaten Haushalte immer interessanter, einen Teil des häuslichen Wasserverbrauchs über eine Nutzungsanlage für Regenwasser bereitzustellen. So läßt sich beispielsweise die Toilettenspülung und die Waschmaschine ohne weiteres mit Regenwasser beschicken. Ebenso kann der Garten mit gesammeltem Regenwasser bewässert werden. Schätzungsweise lassen sich so täglich mindestens 50 Liter kostbares Trinkwasser pro Person einsparen.

Bei Nutzungsanlagen für Regenwasser stammt das Regenwasser größtenteils vom Dach des Eigenheims. Über ein Fallrohr gelangt das über die Ziegel in die Dachrinnen strömende Regenwasser beispielsweise in ein Absetzbecken, in dem Verunreinigungen aufgefangen werden. Um solche Verunreinigungen gering zu halten, sollte das Wasser nicht über ein Gras- oder Teerpappendach laufen und auch nicht über Bleischürzen um Dachfenster. Eine vorzugsweise im Erdreich vorgesehene Zisterne sammelt den Regen sowohl kühl- als auch lichtgeschützt, so daß sich in der Zisterne keine Algen bilden können. Über eine den üblichen Leitungsdruck generierende Pumpe wird dann das Wasser zu den verschiedenen Zapfstellen - Toilettenspülkasten, Waschmaschine, Gartenschlauchanschluß, etc. - gepumpt.

Nun sind an die in das Erdreich einzusetzenden Zisternen erhebliche Anforderungen zu stellen, zumal diese zumindest dem allseitigen Erddruck standhalten müssen. Wird eine Zisterne unterhalb eines begehbaren oder gar durch PKW befahrbaren Bereichs, beispielsweise unterhalb einer Hofeinfahrt, in das Erdreich verbracht, so muß die Zisterne eine ganz erhebliche Stabilität aufweisen.

Des weiteren ist wesentlich, daß der Einbau einer in Rede stehenden Nutzungsanlage für Regenwasser zur Vermeidung längerer und aufwendiger Bauzeiten äußerst schnell durchzuführen ist. Folglich kommen hier eigentlich nur Zisternen in Frage, die quasi funktionsfertig, d.h. als Fertigbauteile, angeliefert werden. Aufgrund des erforderlichen Fassungsvermögens von doch mindestens 2 bis 3 m³ nehmen die in Rede stehenden Zisternen sowohl bei der Lagerung als auch beim Transport einen erheblichen Raum in Anspruch, der insbesondere bei der Anlieferung ganz erhebliche Transport- und Handhabungsprobleme mit sich bringt.

Aus der GB-A-2 065 736 ist nunmehr ein als Faulbehältnis dienender Tank bekannt. Der bekannte Tank ist mindestens zweiteilig ausgebildet und weist eine Öffnung auf. Im Betriebszustand sind die das Behältnis bildenden, als Grundteil und als Deckelteil ausgeführten Teilsegmente wasserdicht und lösbar miteinander verbunden. Der Querschnitt des Grundteils erweitert sich nach oben. Zum Zuführen und zum Entnehmen einer in dem Behältnis aufnehmbaren Flüssigkeit weist das Behältnis im Deckelteil ausgebildete Einlaß- sowie Auslaßrohre auf.

Bei Verwendung des bekannten Tanks zur Wasserspeicherung ist problematisch, daß der Tank zur Aufrechterhaltung einer gleichbleibend hohen Wasserqualität regelmäßig gereinigt werden muß. Hierfür ist es erforderlich, den Tank vollständig zu demontieren bzw. zumindest das gesamte Deckelteil einschließlich darin ausgebildeter Einlaß- sowie Auslaßrohre abzunehmen. Dies ist, insbesondere bei einer Installation des Tanks im Boden, äußerst aufwendig.

Der vorliegenden Erfindung liegt daher die Aufgabe zugrunde, einen Tank bzw. eine Zisterne der in Rede stehenden Art derart auszugestalten und weiterzubilden, daß ein Höchstmaß an Betriebssicherheit gegeben ist.

Der erfindungsgemäße Tank, der die obige Aufgabe löst, ist durch die Merkmale des Patentanspruches 1 gekennzeichnet. Danach ist der Tank bzw. die Zisterne der eingangs genannten Art derart ausgebiidet, daß das Grundteii im Bereich des oberen Randes einen den maximalen Füllstand vorgebenden Überlauf aufweist, daß die Wasserfläche bei Erreichen des maximalen Füllstands am größten ist und daß der Überlauf als Skimmer dient.

In erfindungsgemäßer Weise ist erkannt worden, daß die Ausbildung des Grundteils mit einem im Bereich des oberen Randes den maximalen Füllstand vorgebenden Überlauf die obige Aufgabe auf überraschend einfache Weise löst. Diese Wahl des Installationsortes des Überlaufs ist insoweit besonders günstig, als die Wasseroberfläche im Bereich des oberen Randes aufgrund des sich nach oben erweiternden Grundteils nahezu maximal ist. Durch das sich nach oben erweiternde Grundteil ist nämlich bereits erreicht, daß sich an der Wasseroberfläche schwebende bzw. schwimmende Partikel mit zunehmendem Füllstand immer ungehinderter an der Wasseroberfläche anlagern können, ohne - wie dies bei sich nach oben verjüngenden Behältnissen der Fall ist - komprimiert zu werden und dann aufgrund der Komprimierung abzusinken. An der Wasseroberfläche schwimmende Partikel können folglich ungehindert bis zu einem maximalen Füllstand getragen werden und dort über den in erfindungsgemäßer Weise angeordneten Überlauf regelrecht ausgeschwemmt bzw. ausgeflutet werden. Hierdurch weist das Behältnis eine Art selbstreinigenden Effekt auf. Mittels des obigen Selbstreinigungseffekts ist es möglich, einen ganz wesentlichen Anteil an durch den Wassersammelvorgang in das Behältnis eingeströmten Schmutzpartikeln, Blättern oder dgl. während des bestimmungsgemäßen Betriebs des Tanks als Regenwasserspeicher wieder zu beseitigen. Ein Eingreifen von Wartungspersonal ist zu Erreichung dieses Selbstreinigungseffekts nicht erforderlich. Die Funktion ist allein durch die Anordnung eines den maximalen Füllstand vorgebenden Überlaufs im Bereich des oberen Randes des Grundteils gewährleistet, wobei die Wasserfläche bei Erreichen des maximalen Füllstandes am größten ist und der Überlauf als Skimmer dient.

Folglich ist mit dem erfindungsgemäßen Tank ein Tank angegeben bei dem eine wesentliche Verlängerung der Reinigungsintervalle auf einfache Weise ermöglicht ist und der dadurch ein Höchstmaß an Betriebssicherheit bietet.

Der Transport sogenannter Fertigtanks bzw. Fertigzisternen läßt sich dann ganz besonders einfach bewerkstelligen, wenn das Behältnis im geteilten Zustand gelagert und zugeliefert werden kann. Erst am Einsatzort wird der Tank dann in seinen Betriebszustand verbracht, nämlich dadurch, daß die Teilsegmente des Behältnisses wasserdicht und lösbar miteinander verbunden werden. Folglich nehmen die Teile bzw. Teilsegmente des Behältnisses erst am Einsatzort ihr Gesamtvolumen ein und lassen sich zuvor - als Einzelteile - mühelos lagern, transportieren und auch handhaben. Bei entsprechender Ausgestaltung der Teilsegmente als Grundteil und Deckelteil lassen sich diese beispielsweise ineinanderlegen bzw. aufeinanderstapeln, so daß Teilsegmente mehrerer Tanks oder Zisternen gemeinsam in einem Stapel gelagert und transportiert werden können. Das den eigentlichen Tankinhalt ausmachende Volumen hat im Rahmen einer solchen Ausgestaltung für die Lagerung und den Transport keine Bedeutung mehr, zumal das dieses Volumen vorgebende Behältnis erst am Einsatzort, durch Überführung in den Betriebszustand, d.h. durch Montage, geschaffen wird.

Im Hinblick auf eine ganz besonders stabile Ausgestaltung des erfindungsgemäßen Tanks bzw. der erfindungsgemäßen Zisterne ist es von Vorteil, wenn das Behältnis zumindest weitgehend kugelförmig ausgeführt ist. Die Teilsegmente sind dann entsprechend als Kugelsegmente ausgebildet. Dabei lassen sich von außen auf den Tank wirkende Drücke am besten abfangen, wobei die kugelige Ausgestaltung des Tanks die in statischer Hinsicht stabilste Ausgestaltung darstellt. Hinzu kommt der weitere Vorteil, daß sich die beiden Kugelsegmente des Behältnisses im Sinne von Kugelschalen ineinander stapeln lassen, so daß zur Lagerung und zum Transport des Tanks nur der halbe Raum erforderlich ist. Werden gleich mehrere Kugelsegmente ineinandergestapelt, so verringert sich der zur Lagerung und zum Transport erforderliche Raum pro Tank und/oder Zisterne abermals ganz erheblich.
Sowohl im Hinblick auf eine einfache Fertigung als auch im Hinblick auf eine besonders stabile Ausgestaltung ist es von weiterem Vorteil, wenn das kugelförmige Behältnis in etwa mittig in zwei etwa gleich große Kugelsegmente unterteilt ist.

Bei einer hinsichtlich der Konstruktion ganz besonders vorteilhaften Ausgestaltung des erfindungsgemäßen Tanks weist das Grundteil einen zumindest weitgehend ebenen Boden auf. Dieser geht dann naht- und kantenlos in Form eines entsprechend gekrümmten Übergangsbereichs in eine nach oben auseinanderlaufende Seitenwandung über. Besonders vorteilhaft ist es, wenn der Boden des Grundteils im wesentlichen kreisrund ausgeführt ist und die Seitenwandung des Grundteils entsprechend vom Boden ausgehend konisch nach oben auseinanderiaufend ausgeführt ist. In dieser Form weist das Grundteil keinerlei Innenkanten auf, in denen sich Schmutz oder andere Partikel ablagern könnten, was u.a. aus Hygienegründen zu vermeiden ist. Die leicht konische Form der Seitenwandung und auch der abgerundete Übergangsbereich zwischen Boden und Seitenwandung des Grundteils erlaubt zudem eine Stapelung bzw. ein Ineinanderschieben von mehreren gleichartigen Grundteilen.

Gemäß voranstehenden Ausführungen ist ganz besonders wesentlich, daß sich der Querschnitt des Grundteils bewußt nach oben erweitert, so daß die Wasseroberfläche mit steigendem Füllstand zunimmt. Dadurch wird erreicht, daß sich an der Wasseroberfläche schwebende bzw. schwimmende Partikel mit zunehmendem Füllstand ungehindert an der Wasseroberfläche anlagern können, ohne - wie dies bei sich nach oben verjüngenden Behältnisses der Fall ist - komprimiert zu werden und ohne aufgrund der Komprimierung abzusinken. Folglich ist es ein ganz wesentlicher Aspekt, daß an der Wasseroberfläche schwimmende Partikel ungehindert bis zu einem maximalen Füllstand getragen werden und dort über einen im Bereich des oberen Randes den maximalen Füllstand vorgebenden Überlauf regelrecht ausgeschwemmt bzw. ausgeflutet werden. Demnach weist das Behältnis eine Art selbstreinigenden Effekt auf. Nochmals sei hier angemerkt, daß die Wasseroberfläche bei Erreichen des maximalen Füllstandes am größten ist, so daß die nach oben getragenen Partikel bis hin zum Ausschwemmen nicht verdichtet werden.

Der durch den sich nach oben hin erweiternden Querschnitt hervorgerufene Effekt kann dadurch noch begünstigt werden, daß der obere Rand - im Bereich des Aus- bzw. Überlaufs - abermals erweitert ist, wobei umfangsmäßig ohne weiteres auch mehrere Skimmer angeordnet sein können, durch die die an der Wasseroberfläche befindlichen Schwebeteilchen bzw. Verschmutzungen aus dem Tank ausgespült werden. Vorzugsweise sind hier zwei Skimmer einander gegenüberliegend angeordnet, die mit entsprechenden Skimmerabläufen strömungsverbunden sind.

In Verbindung mit einem gemäß voranstehender Erörterung ausgebildeten Grundteil erweist sich die Verwendung eines Deckelteils als günstig, welches im wesentlichen in Form eines Kegelstumpfs ausgeführt ist. Auch diese Deckelteile sind aufgrund ihrer Form stapelbar. Außerdem kann die die Verbindung zwischen dem Grundteil und dem Deckelteil bildende Trennfuge bei entsprechender Dimensionierung dieser Teilsegmente so angeordnet werden, daß sie oberhalb des zu erwartenden maximalen Flüssigkeitsniveaus in dem Behältnis angeordnet ist.

Dabei könnte das Behältnis - bei obenliegender Öffnung - eine in etwa horizontal verlaufende Trennfuge zwischen den Teilsegmenten, nämlich dem Grundteil und dem Deckelteil aufweisen. Ein kugelförmiges Behältnis ließe sich dann auch durch zwei etwa gleichgroße Kugelsegmente realisieren, so daß die Trennfuge exakt mittig angeordnet wäre.

In konstruktiv vorteilhafter Weise könnte die Trennfuge durch das jeweils offene Ende der Teilsegmente umlaufende, nach außen abragende und zur gegenseitigen Anlage bestimmte Flansche gebildet sein, wobei die Flansche wiederum derart ausgebildet sein können, daß sie im Betriebszustand des Behältnisses, d.h. bei montierten Teilsegmenten, einen Flächenkontakt bilden.

Zur einfachen Montage könnten die Flansche mittels eines umlaufenden und die Flansche aneinanderpressenden Klemmringes miteinander verbunden werden. Insbesondere im Hinblick auf eine besonders einfache Ausgestaltung des erfindungsgemäßen Tanks ist es jedoch von ganz besonderem Vorteil, wenn die Flansche paarweise miteinander korrespondierende Durchgänge aufweisen und wenn zumindest jeweils einer der korrespondierenden Durchgänge mit einem Innengewinde zur gegenseitigen Verschraubung versehen sind.

Zur weiterreichenden Abdichtung zwischen den Flanschen könnte dort eine Dichtung angeordnet sein. Diese Dichtung könnte wiederum als Ringdichtung ausgeführt sein. Bei flacher Ausgestaltung der Ringdichtung könnte diese in weiter vorteilhafter Weise Ausnehmungen zum Durchführen der die Teilsegmente zusammenhaltenden Schrauben aufweisen, so daß auch im Bereich um die Schrauben herum eine wirksame Abdichtung geschaffen ist. Leckagen im Bereich der Trennfuge sind - bei ordnungsgemäßem gleichmäßigem Verschrauben bzw. Anziehen der Schrauben - weitgehend ausgeschlossen.

Die eingangs genannte Öffnung im Deckelteil des Behältnisses könnte in weiter vorteilhafter Weise eine zumindest einen Zuiauf, einen Auslauf und ggf. eine Belüftung aufweisende Armatur aufweisen, nämlich mit einer solchen Armatur verschlossen sein. Dabei kann es sich um einen integralen Bestandteil, beispielsweise um ein eingegossenes Teil, handeln. Im Hinblick auf eine zweckdienliche Wartung bzw. im Hinblick auf das Erfordernis der Austauschbarkeit der Armatur könnte diese beispielsweise aus Metall gefertigt sein und mit dem oberen Teilsegment bzw. Kugelsegment, vorzugsweise über einen Ringflansch, verschraubt sein. Zur Wartung könnte somit die gesamte Armatur abgenommen und ausgetauscht bzw. gereinigt oder repariert werden.

Der in der Armatur vorgesehene Zulauf könnte behälterseitig im Sinne einer einfachen Öffnung ausgeführt sein. Zur Vermeidung von Verunreinigungen innerhalb des Tanks ist es jedoch von ganz besonderem Vorteil, wenn der Zulauf einen vorzugsweise in den Behälter hineinragenden Filter aufweist. Dieser Filter, beispielsweise ein äußerst engmaschiges Sieb, eine Kartusche aus keramischem Filtermaterial oder gar ein Sandfilter, könnte im Sinne eines herausnehmbaren Einhängefilters ausgeführt sein, so daß auch insoweit eine Wartung möglich ist, ohne dabei die gesamte Armatur abzuschrauben bzw. abzuflanschen.

An den Auslauf könnte sich innerhalb des Behältnisses ein Ansaugrohr anschließen, welches bis in den tiefsten Punkt des Behältnisses ragt. Somit wäre eine nahezu völlige Entleerbarkeit des Behältnisses gewährleistet. Damit trotz des Einhängefilters in das Behältnis gelangte Verunreinigungen nicht auch in den häuslichen Regenwasserkreislauf gelangen, könnte am freien Ende des Ansaugrohres abermals ein Filter vorgesehen sein, welcher ein Ansaugen der Verunreinigungen weitgehend verhindert. Auch dieser Filter könnte im Sinne eines engmaschigen Siebes oder im Sinne einer Kartusche oder dgl. ausgeführt sein, wobei zur Wartung des in Rede stehenden Filters die Armatur insgesamt abgenommen werden müßte.

Bei einer weiter vorteilhaften Ausgestaltung des erfindungsgemäßen Tanks ist auchin einem vorgeschalteten Filterkasten ein Anschluß für einen Überlauf bzw. Ablauf vorgesehen. Der zuvor bereits erörterte, als Skimmer dienende Überlauf kann mit dem Überlauf bzw. Ablauf des Filterkastens zur weiteren Ableitung strömungsverbindbar sein, wobei beide Überläufe entweder in eine Sickergrube bzw. in ein Sickerloch oder in die Kanalisation ieitbar sind.

Im Hinbick auf eine materialmäßige Ausgestaltung des erfindungsgemäßen Tanks ist es vor allem unter fertigungstechnischen Gesichtspunkten von Vorteil, wenn das Behältnis aus Kunststoff hergestellt ist. Hinzu kommt bei einer solchen Ausgestaltung der ganz besondere Vorteil, daß ein aus Kunststoff bestehender Tank wesentlich geringeres Gewicht als Tanks aus Metall oder mineralischen Bestandteilen aufweist. Zum Erreichen der erforderlichen Stabilität könnte das Behältnis aus glasfaserverstärktem Kunststoff hergestellt sein, so daß ohne Erhöhung der Masse bzw. des Gewichts eine abermalige Stabilitätssteigerung gegeben ist. Die Teilsegmente bzw. Kugelsegmente könnten eine Wanddicke von 4 bis 10 mm, vorzugsweise von 7 mm, aufweisen, wobei sich dabei mühelos ein Behältnis mit einem Volumen von etwa 4 m³ realisieren läßt. Eine hinreichende Stabilität auch unterhalb befahrbarer Bereiche, beispielsweise im Bereich von Garagen- bzw. Hofeinfahrten, wäre somit gewährleistet.

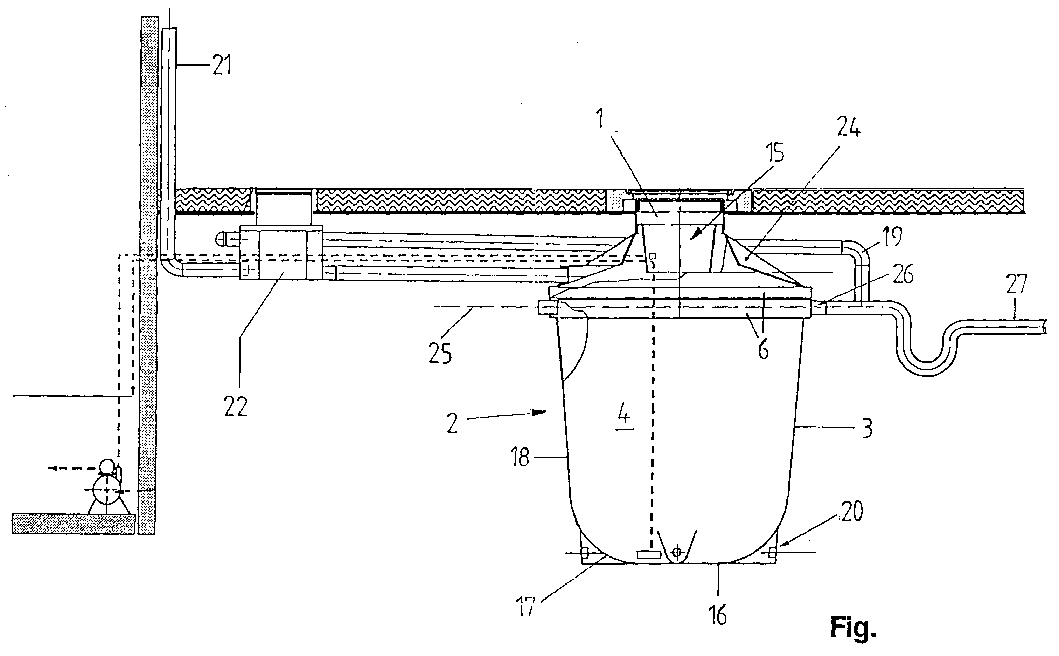

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt die einzige
- Figur: in schematischer Darstellung ein Ausführungsbeispiel eines erfindungsgemäßen Tanks bzw. einer erfindungsgemäßen Zisterne mit montierter Armatur im Betriebszustand.

Die einzige Figur zeigt ein Ausführungsbeispiel eines erfindungsgemäßen Tanks, der aus einem eine Öffnung 1 aufweisenden zwei-teiligen Behältnis 2 mit einer lichtundurchlässigen Wandung 3 besteht. Das Grundteil 4 und das Deckelteil 15 unterscheiden sich in ihrer Form. Das Grundteii 4 weist einen zumindest weitgehend ebenen Boden 16 auf, der naht- und kantenlos in Form eines entsprechend gekrümmten Übergangsbereichs 17 in eine nach oben auseinanderlaufende Seitenwandung 18 übergeht. Der Boden 16 des Grundteils 4 ist zudem kreisrund ausgeführt, so daß die Seitenwandung 18 des Grundteils 4 entsprechend vom Boden 16 ausgehend leicht konisch nach oben auseinanderlaufend ausgeführt ist. Sie weist dabei einen Neigungswinkel zur Vertikalen von ca. 4,5° auf. Das Deckelteil 15 ist relativ flach, im wesentlichen in Form eines Kegelstumpfs ausgeführt und weist als Streben ausgebildete Verstärkungen 24 zur Erhöhung der Deckelstabilität auf. Dies soll insbesondere den Bereich oberhalb des Tanks begehbar oder gar befahrbar machen.

Die Flansche 6 sind derart ausgeführt, daß sie im Betriebszustand des Behältnisses 2 einen gegenseitigen Flächenkontakt bilden.

Gemäß der Darstellung ist nun wesentlich, daß die Wasseroberfläche mit steigendem Füllstand 25 zunimmt. Das Grundteil 4 weist im Bereich des oberen Randes einen den maximalen Füllstand 25 vorgebenden Überlauf 26 auf, wobei die Wasserfläche bei Erreichen des maximalen Füllstandes 25 am größten ist. Des weiteren ist der obere Rand außen erweitert, so daß auch insoweit eine abermalige Vergrößerung der Wasseroberfläche gegeben ist.

Der Überlauf 26 dient als Skimmer, wobei insgesamt zwei Skimmer - einander gegenüberliegend - vorgesehen sind. Der Skimmerablauf bzw. der als Skimmer dienende Überlauf ist mit einem Überlauf 19 bzw. Ablauf eines vorgeschalteten Filterkastens 22 zur weiteren Ableitung strömungsverbunden, wobei eine entsprechende Rohrleitung 27 in eine Sickergrube oder in die Kanalisation führen kann.

Das dargestellte Grundteil 4 weist im Übergangsbereich 17 einen Anschluß 20 auf, so daß der Tank auch als Batterietank verwendet werden kann.

Ein in der einzigen Figur dargestellter Regenwasseranschluß 21 weist den zwischengeschalteten Filterkasten 22 auf, der zumindest einen Grob- und einen Feinfilter im Rahmen einer herausnehmbaren Einhängefiltervorrichtung umfaßt.

Abschließend sei hervorgehoben, daß das zuvor erläuterte Ausführungsbeispiel lediglich der beispielhaften Beschreibung der erfindungsgemäßen Lehre dient, diese jedoch nicht auf das Ausführungsbeispiel beschränkt ist.

## Patentansprüche

1. Tank, insbesondere Zisterne zur Wasserspeicherung bei einer Nutzungsanlage für Regenwasser, bestehend aus einem eine Öffnung (1) aufweisenden Behältnis (2) mit einer vorzugsweise lichtundurchlässigen Wandung (3), wobei das Behältnis (2) mindestens zweiteilig ausgebildet ist, wobei im Betriebszustand die das Behältnis (2) bildenden, als Grundteil (4) und als Deckelteil (15) ausgeführten Teilsegmente (4, 15) wasserdicht und lösbar miteinander verbunden sind und wobei sich der Querschnitt des Grundteils (4) nach oben erweitert,
**dadurch gekennzeichnet**, daß das Grundteil (4) im Bereich des oberen Randes einen den maximalen Füllstand (25) vorgebenden Überlauf (26) aufweist, daß die Wasserfläche bei Erreichen des maximalen Füllstandes (25) am größten ist und daß der Überlauf (26) als Skimmer dient.

2. Tank nach Anspruch 1, dadurch gekennzeichnet, daß das Behältnis (2) zumindest weitgehend kugelförmig und sowohl das Grundteil (4) als auch das Deckelteil (15) als Kugelsegmente ausgeführt ist bzw. sind und daß das kugelförmige Behältnis (2) in etwa mittig in zwei etwa gleichgroße Kugelsegmente (4, 15) unterteilt isi.

3. Tank nach Anspruch 1, dadurch gekennzeichnet, daß das Grundteil (4) einen zumindest weitgehend flachen bzw. ebenen Boden (16) aufweist, daß der Boden (16) naht- und kantenlos in Form eines entsprechend gekrümmten Übergangsbereichs (17) in eine nach oben auseinanderlaufende Seitenwandung (18) übergeht und daß der Boden (16) des Grundteils (4) im wesentlichen kreisrund und die Seitenwandung (18) des Grundteils (4) entsprechend vom Boden (16) ausgehend konisch nach oben auseinanderlaufend ausgeführt sind, so daß die Wasseroberfläche mit steigendem Füllstand zunimmt.

4. Tank nach einem der Ansprüche 1 bis 3, dadurch gekennzeichnet, daß ggf. der obere Rand des Grundteils (4) nach außen erweitert ist, wobei am oberen Rand auch zwei oder mehrere Skimmer bzw. Skimmerabläufe ausgebildet sein können.

5. Tank nach Anspruch 3 oder 4, dadurch gekennzeichnet, daß das Deckelteil (15) im wesentlichen in Form eines Kegelstumpfs ausgeführt ist.

6. Tank nach einem der Ansprüche 1 bis 5, dadurch gekennzeichnet, daß das Behältnis (2) - bei obenliegender Öffnung (1) - eine in etwa horizontal verlaufende Trennfuge (5) zwischen den Teilsegmenten, nämlich dem Grundteil (4) und dem Deckelteil (15), aufweist, daß die Trennfuge (5) durch das offene Ende der Teilsegmente (4, 15) umlaufende, nach außen abragende und zur gegenseitigen Anlage bestimmte Flansche (6) gebildet ist, daß die Flansche (6) derart ausgebildet sind, daß sie im Betriebs-zustand des Behältnisses (2) einen Flächenkontakt bilden und ggf. paarweise miteinander korrespondierende Durchgänge (7) aufweisen und daß zumindest jeweils einer der korrespondierenden Durchgänge (7) ein Innengewinde zur gegenseitigen Verschraubung aufweist.

7. Tank nach Anspruch 6, dadurch gekennzeichnet, daß zwischen den umlaufenden Flanschen (6) eine Dichtung angeordnet ist, daß die Dichtung als Ringdichtung flach mit Ausnehmungen zum Durchführen der die Teilsegmente (4, 15) zusammenhaltenden Schrauben ausgeführt ist.

8. Tank nach einem der Ansprüche 1 bis 7, dadurch gekennzeichnet, daß die Öffnung (1) durch eine zumindest einen Zulauf (8), einen Auslauf (9) und ggf. eine Belüftung aufweisende Armatur (10) verschlossen ist, daß die Armatur (10) mit dem Deckelteil (15), vorzugsweise über einen Ringflansch (11), verschraubt ist, daß der Zulauf (8) einen vorzugsweise in das Behältnis (2) hineinragenden Filter (12) aufweist und daß der Filter (12) als herausnehmbarer Einhängefilter ausgeführt ist.

9. Tank nach einem der Ansprüche 1 bis 8, dadurch gekennzeichnet, daß der Filterkasten (22) einen Überlauf (19) bzw. Ablauf aufweist und daß der Überlauf (19) mit dem als Skimmer dienenden Überlauf (26) zur weiteren Ableitung strömungsverbindbar ist.

10. Tank nach einem der Ansprüche 1 bis 9, dadurch gekennzeichnet, daß das Behältnis (2) aus Kunststoff, vorzugsweise aus glasfaserverstärktem Kunststoff (GFK), hergestellt ist.

## Claims

1. Tank, especially a cistern for water storage in a utilization system for rain water, consisting of a container (2) having an opening (1) and a preferably light-impermeable wall (3), the container (2) being formed from at least two parts, wherein, in the operating state, the segments (4, 15) forming the container (2), which are constructed as a base part (4) and a lid part (15), are joined to each other in a water-tight and separable manner and wherein the cross-section of the base part (4) widens towards the top, characterised in that the base part (4) has in the region of the upper edge an overflow (26) which determines the maximum filling state (25), the water surface is at its largest when the maximum filling state (25) is reached, and the overflow (26) serves as a skimmer.

2. Tank according to claim 1, characterised in that the container (2) is at least substantially spherical and both the base part (4) and the lid part (15) are constructed as segments of a sphere, and the spherical container (2) is divided approximately in the middle into two sphere segments (4, 15) of approximately equal size.

3. Tank according to claim 1, characterised in that the base part (4) has an at least substantially flat or even bottom (16), the bottom (16) leads seamlessly and without edges, in the form of an appropriately curved transition region (17), into a side wall (18) which diverges towards the top, and the bottom (16) of the base part (4) is essentially circular and the side wall (18) of the base part (4) accordingly diverges conically from the bottom (16) towards the top, so that the water surface increases as the filling state rises.

4. Tank according to any one of claims 1 to 3, characterised in that the upper edge of the base part (4) is optionally widened outwardly, it also being possible for two or more skimmers or skimmer outlets to be constructed at the upper edge.

5. Tank according to claim 3 or 4, characterised in that the lid part (15) is essentially in the shape of a truncated cone.

6. Tank according to any one of claims 1 to 5, characterised in that - in cases where the opening (1) is at the top - the container (2) has a join (5) extending approximately horizontally between the segments, namely the base part (4) and the lid part (15), the join (5) is formed by flanges (6) encircling the open end of the segments (4, 15) and projecting outwardly which are intended to rest one aqainst the other, the flanges (6) are so constructed that they form a planar contact in the operating state of the container (2) and optionally have pairs of mutually corresponding passages (7), and at least one of the respective corresponding passages (7) has an internal screw-thread for mutual screw-connection.

7. Tank according to claim 6, characterised in that a seal is arranged between the encircling flanges (6), the seal is constructed as a ring seal lying flat with apertures through which the screws that hold the segments (4, 15) together can be passed.

8. Tank according to any one of claims 1 to 7, characterised in that the opening (1) is closed by a fitting (10) having at least one inlet (8), one outlet (9) and optionally one ventilator, the fitting (10) is screwed to the lid part (15), preferably by way of a ring flange (11), the inlet (8) has a filter (12) which preferably extends into the container (2), and the filter (12) is constructed as a removable hang-in filter.

9. Tank according to any one of claims 1 to 8, characterised in that the filter casing (22) has an overflow (19) or outlet and, for further drainage purposes, the overflow (19) can be connected in flow to the overflow (26) that serves as a skimmer.

10. Tank according to any one of claims 1 to 9, characterised in that the container (2) is manufactured from plastics material, preferably from glass-fibre-reinforced plastics material (GFRP).

## Revendications

1. Réservoir, en particulier citerne pour le stockage de l'eau avec une installation complémentaire pour l'eau de pluie, réservoir constitué d'un récipient (2) présentant une ouverture (1) et comportant une paroi (3) de préférence non translucide, le récipient (2) étant composé d'au moins deux parties, où en état d'utilisation les segments partiels (4, 15) constituant l'élément de base (4) et l'élément de couvercle (15) sont reliés l'un à l'autre de manière hermétique et amovible, et où la section transversale de la partie de base (4) s'élargit vers le haut,
caractérisé en ce que l'élément de base (4) présente dans la région du bord supérieur un trop-plein (26) déterminant le niveau de remplissage maximal, en ce que la superficie de l'eau est maximale lorsque le niveau de remplissage maximal (25) est atteint et en ce que le trop-plein fait office de dispositif d'écumage.

2. Réservoir suivant la revendication 1, caractérisé en ce que le récipient (2) est tout au moins largement de forme sphérique et en ce que tant l'élément de base (4) qu'également l'élément de couvercle (15) ont la forme de segments sphériques et en ce que le récipient de forme sphérique (2) est sensiblement en son milieu partagé en deux segments sphériques (4, 15) sensiblement de même grandeur.

3. Réservoir suivant la revendication 1, caractérisé en ce que l'élément de base (4) présente un fond (16) au moins sensiblement plan ou plat, en ce que le fond (16) se prolonge sans solution de continuité et sans arête sous forme d'une zone de transition incurvée (17) par une paroi latérale évasée vers le haut (18) et en ce que le fond (16) de l'élément de base (4) est sensiblement de forme circulaire et en ce que la paroi latérale (18) de l'élément de base (4) est de la sorte évasée en cône depuis le fond (16), de telle sorte que la superficie de l'eau augmente en même temps que l'augmentation du niveau de remplissage.

4. Réservoir suivant l'une quelconque des revendications de 1 à 3, caractérisé en ce que le cas échéant le bord supérieur de l'élément de base (4) est élargi vers l'extérieur, et en ce qu'au niveau du bord supérieur peuvent être formés deux ou plusieurs écoulements d'écumage.

5. Réservoir suivant la revendication 3 ou 4, caractérisé en ce que l'élément de couvercle (15) a sensiblement la forme d'un tronc de cône.

6. Réservoir suivant l'une quelconque des revendications de 1 à 5, caractérisé en ce que le récipient (2) - l'ouverture (1) étant en haut - présente un joint de séparation (5) entre les segments partiels, à savoir l'élément de base (4) et l'élément de couvercle (15), en ce que le joint se séparation (5) est constitué par des brides (6) situées à la périphérie de l'extrémité ouverte des segments partiels, brides faisant protubérance vers l'extérieur et destinées à s'appliquer l'une sur l'autre, en ce que les brides (6) sont conçues de manière telle qu'en service du récipient (2), elles constituent un contact de surface et présentent le cas échéant des passages (7) mutuellement correspondants et en ce que tout au moins l'un des passages correspondants (7) présente un filetage intérieur pour la réunion par vissage des segments partiels.

7. Réservoir suivant la revendication 6, caractérisé en ce qu'entre les brides périphériques (5) est disposé un élément d'étanchéité, en ce que l'élément d'étanchéité est constitué par un élément de joint annulaire avec des évidements pour le;passage des vis réunissant les segments partiels (4, 15).

8. Réservoir suivant l'une quelconque des revendications de 1 à 7, caractérisé en ce que l'ouverture (1) est fermée par une armature (10) présentant au moins une admission (8), une évacuation (9) et le cas échéant une ventilation, en ce que l'armature (10) est fixée par vissage à l'élément de couvercle (15), de préférence par l'intermédiaire d'une bride annulaire (11), en ce que l'admission (8) présente un filtre (12) pénétrant de préférence dans le récipient (2) et en ce que le filtre (12) a la forme d'un filtre suspendu amovible.

9. Réservoir suivant l'une quelconque des revendications de 1 à 8, caractérisé en ce que la boîte de filtration (22) présente un trop-plein (19) ou un écoulement et en ce que le trop-plein (19) peut, à des fins d'évacuation, être raccordé au trop-plein (26) servant de dispositif d'écumage.

10. Réservoir suivant l'une quelconque des revendications de 1 à 9, caractérisé en ce que le récipient (2) est fabriqué en matière plastique, de préférence en matière plastique verre-résine (GFK).
